# EUROPEAN PATENT APPLICATION

(11) **EP 4 108 400 A1**
(43) Date of publication of application: **28.12.2022**
(21) Application number: 21756228.9
(22) Date of filing: 19.02.2021
(51) Int. Cl.: B27D 1/04, B32B 21/13

(54) **STRUCTURAL LAMINATED VENEER LUMBER AND METHOD FOR PRODUCING SAME**

(30) Priority: 19.02.2020 JP 2020026509
(71) Applicant: Uni-Wood Corporation Co., Ltd., Hyogo 663-8162 (JP)
(72) Inventor: YOKOO Kuniharu, Nishinomiya-shi Hyogo 663-8162 (JP)
(74) Representative: Marks & Clerk LLP
(86) International application number: PCT/JP2021/006321
(87) International publication number: WO 2021/167059

(57) **Abstract**

Provided are: a structural laminated veneer lumber that is of a novel configuration and that can be used as a structural material; and a method for producing same. This structural laminated veneer lumber is obtained by stacking thin layers of veneers 11, 12 vertically on one another via an adhesive 13. Used as the veneers are veneers 12 each formed from a high-density tree species having an air-dried specific gravity of 0.5 or more and veneers 11 each formed from a low-density tree species having an air-dried specific gravity of less than 0.5. Upper and lower surface layers 21 are disposed so at to constitute surface sides of a structural laminated veneer lumber, whereas an intermediate layer 22 is disposed between the upper and lower surface layer 12. These laminated veneers are compressed in the thickness direction resulting in a consolidated structural veneer lumber 2.

## Description

### TECHNICAL FIELD

The present invention relates to a structural laminated veneer (single plate) lumber and a method for producing the same.

### BACKGROUND ART

Conventionally, as a laminated composite wood material, the inventions of Patent Documents 1 and 2 have been proposed by the applicant of the present application. Objects of these inventions were to provide a laminated composite wood material having various properties such as desired bending strength and a method for producing the same by using wood materials of a plural kinds of tree species, but these were not a proposal premised on processing by consolidation.

On the other hand, Japanese domestic conifers planted in large numbers after the war require thinning and main cutting from the viewpoint of the local environment, but Japanese cedar (sugi) has a low air-dried specific gravity of 0.36 to 0.45, so sufficient development of demand has not progressed due to the problems of its physical properties such that strength and Young's modulus of elasticity are low, and surface nature that has many knots.

Moreover, there are problems that the materials vary widely, that it is difficult to dry them uniformly, and that the moisture conductivity is poor, so that they are rarely used as a building structural material, and development of technical applications is awaited.

Poplar is a fast-growing tree planted in large quantities in the East China region, etc., of China, and can be harvested and logged about 10 years after planting, but it is not used as wood for building structures since not only it is light and weak with an air-dry specific gravity of around 0.4, but also material quality thereof is markedly fluctuated.

Eucalyptus has an air-dry specific gravity of about 0.55 and is planted in large quantities in the South China region, etc., of China, which is abundant in resources, however, there is a problem that there are few effective application methods since its sapwood has a problem in which it has high strength but splits easily, and its immature heartwood has the same specific gravity of the sapwood but is brittle and weak.

As a method of increasing the strength of wood, there is a method of consolidation that compresses to increase the specific gravity. As an example, it has been carried out to obtain high strength by adhering consolidated veneers, but there is a problem that consolidation of each veneer takes much time and cannot be mass-produced. Various attempts have been made to improve the surface properties (smoothness, abrasion property, etc.) of conventional consolidated wood as a decorative material, but consolidation methods for strengthening structural lumber for construction and for mass production have rarely been implemented and are limited to the proposals shown in Patent Document 3.

In particular, when low-density tree species are consolidated with a square timber such as a lumber product, there is a problem that the surface layer portion is largely consolidated, the core portion is insufficiently consolidated, thus the product is finished with insufficient consolidation state, and as a result, there is a problem that the variation in performance becomes large.

### PRIOR ART DOCUMENTS

### PATENT DOCUMENTS

Patent Document 1: JP Patent No. 4,012,881B2
Patent Document 2: JP Patent No. 6,407,134B2
Patent Document 3: JP 2011-143698A

### SUMMARY OF THE INVENTION

### PROBLEMS TO BE SOLVED BY THE INVENTION

In view of the above-mentioned circumstances, an object of the present invention is to propose a structural laminated veneer lumber having a new structure that can be used as a structural material and a method for producing a structural laminated veneer lumber that can be mass-produced.

### MEANS TO SOLVE THE PROBLEMS

The present invention is to provide a structural laminated veneer lumber in which a plurality of veneers, which are thin plate materials, are laminated one above the other via an adhesive. As the above-mentioned plurality of veneers, a veneer of a high-density tree species having an air-dry specific gravity of 0.5 or more and a veneer of a low-density tree species having an air-dry specific gravity of less than 0.5 are used. This structural laminated veneer lumber is provided with upper and lower surface layers arranged on the surface sides thereof and an intermediate layer arranged between the upper and lower surface layers, and these laminated materials including the upper and lower surface layers and the intermediate layer is composed of a consolidated laminated lumber compressed in the thickness direction.

In the present invention, only a plural sheet of veneers of the low-density tree species are arranged in the surface layer. The veneer of the high-density tree species and the veneer of the low-density tree species are arranged in a mixed manner in the intermediate layer, and the veneer in the intermediate layer in contact with the veneer of the surface layer is composed of the veneer of the high-density tree species.

In the present invention, it is suitable to carry out by arranging only two or three sheets of veneers of the low-density tree species in the surface layer.

Also, in carrying out the present invention, only the veneers of the low-density tree species are arranged in the surface layer, the veneer of the high-density tree species and the veneer of the low-density tree species are arranged in a mixed manner in the intermediate layer, and these veneers subjected to consolidation can be made that an average thickness of the veneer of the low-density tree species is equal to or greater than an average thickness of the veneer of the high-density tree species.

In the present invention, the intermediate layer can be made a material in which the veneer of the high-density tree species and the veneer of the low-density tree species are alternately arranged.

It is preferable to carry out the adhesion using a water-soluble adhesive, in particular, a heat-curable phenol-based adhesive aqueous solution and consolidation by hot pressing.

As the veneer of the high-density tree species, various kinds of relatively dense trees having an air-dry specific gravity of 0.5 or more can be used, and for example, a veneer of eucalyptus can be adopted as the wood of an early-maturing tree. As the veneer of the low-density tree species, various kinds of relatively low dense trees having an air-dry specific gravity of less than 0.5 can be used, and for example, a veneer of Japanese cedar can be adopted as a Japanese tree, or a veneer of poplar can be adopted as a tree made from China, and these may be present in a mixed manner.

In addition, the present invention is to provide a method for producing the structural laminated veneer lumber in which a plural sheet of veneers, which are thin plate materials, are adhered one above the other to laminate.

The producing method of the present invention comprises a laminating step of laminating a plurality of the veneers one above the other via an adhesive to obtain a laminated veneer lumber and a consolidation step of applying pressure to the laminated veneer lumber in a vertical direction to obtain a consolidated laminate. As the plurality of the veneers used for the laminated veneer lumber, a veneer of a high-density tree species having an air-dry specific gravity of 0.5 or more and a veneer of a low-density tree species having an air-dry specific gravity of less than 0.5 are used. The laminating step is to prepare the laminated veneer lumber by laminating only the veneers of the low-density tree species as a surface layer, and by laminating a veneer of the high-density tree species and a veneer of the low-density tree species in a mixed manner as an intermediate layer between the upper and lower surface layers to produce a laminated veneer lumber. A heat-curable phenol-based adhesive aqueous solution is used for adhering of the veneers, and in the consolidation step, it is effective to carry out the consolidation by hot pressing that pressurizes and heats.

### EFFECTS OF THE INVENTION

The present invention has been able to provide a structural laminated veneer lumber having a novel constitution that can be used as a structural material, and a method for producing a structural laminated veneer lumber that can be mass-produced.

In carrying out the present invention, a veneer of eucalyptus can be adopted as a veneer of the high-density tree species, and a veneer of Japanese cedar or a veneer of poplar can be adopted as a veneer of the low-density tree species. Therefore, under the current situation of wood resources in Japan, where raw materials for structural lumber materials such as white cedar (hinoki), Japanese larch (Larix), redwood and Douglas fir are in short supply, structural lumber materials can be produced from Japanese cedar, poplar and eucalyptus, which are abundant as resources.

In addition, by alternately laminating eucalyptus veneer of high-density tree species and Japanese cedar veneer or poplar veneer of low-density tree species, the possibility of bias of partial consolidation is reduced, and it is possible to obtain a relatively uniform consolidation effect. According to this, variation in the quality of the structural laminated veneer lumber obtained thereby is suppressed and the standard deviation can be made small.

At the time of consolidation, the veneer of the high-density tree species receives the pressure relatively uniformly to the veneer of the low-density tree species and transmits the same, so that consolidation of the veneer of the low-density tree species can be carried out uniformly. In particular, by arranging a plural number of the veneers of the low-density tree species in the surface layer, the veneers of the high-density tree species in the intermediate layer in contact with thereto can receive the pressure at the time of consolidation processing relatively uniformly. Incidentally, in the surface layer, if the number of the sheets of a plurality of the veneers of the low-density tree species is too large, uniform consolidation becomes difficult so that it is preferable to carry out with two or three sheets.

In addition, since the water content in the water-soluble adhesive, in particular, the water content the aqueous solution of the heat-curable phenol-based adhesive induces the effect of consolidation, so that the consolidation effect of Japanese cedar and poplar veneers, which are the low-density tree species, is concentrated to the portion close to the adhesive, and it appears linearly in the fiber direction and intermittently in the laminating direction, whereby relatively stable consolidation effect can be obtained.

In the producing method of the present invention, it can be produced only by combining different species of the veneers at the time of laying up, and merely changing the heat pressure conditions in the production process of the usual laminated veneer lumber.

In this producing method, the adhesion step and the consolidation step can be carried out at once by adjusting the pressurizing pressure and the overheat temperature, so that there is a characteristic feature that productivity is high.

In addition, in order to stabilize the consolidation effect, by heating to 130°C to 150°C at the time of hot pressing in which pressurization and heating are carried out, it is possible to obtain a dimensional stabilization effect.

### BRIEF DESCRIPTION OF THE DRAWINGS

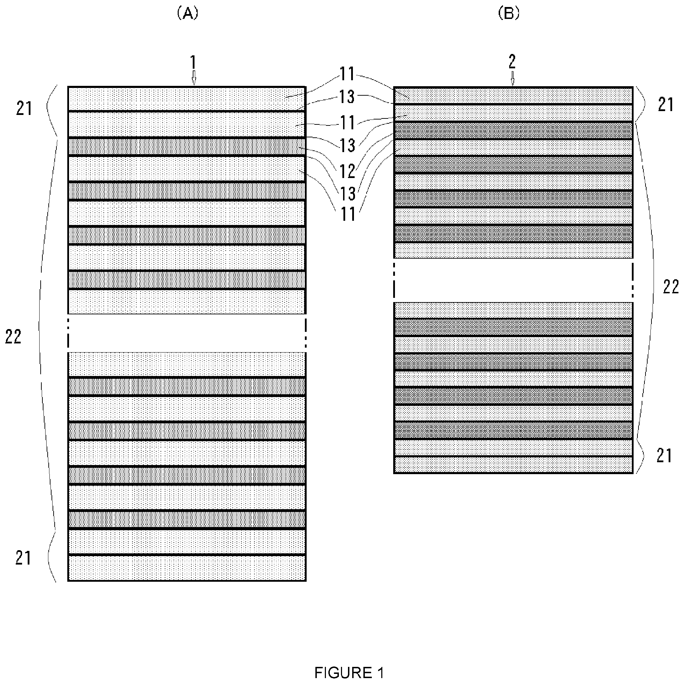

FIG. 1 shows the layer structure of the structural laminated veneer lumber according to the embodiment of the present invention, (A) is an explanatory view of the layer structure of the laminated veneer lumber before consolidation and (B) is an explanatory view of the layer structure of the structural laminated veneer lumber after consolidation.
FIG. 2 is a conceptional explanatory view of consolidation of the structural laminated veneer lumber of the same.

### EMBODIMENT TO CARRY OUT THE INVENTION

Hereinafter, embodiments of the present invention will be explained with reference to the drawings. Incidentally, in the following explanation, the laminated lumber before consolidation is referred to as a laminated veneer lumber 1, and the laminated lumber after consolidation is referred to as a structural laminated veneer lumber 2.

### (Summary)

The laminated veneer lumber 1 is a laminated veneer lumber in which a plurality of veneers, which are thin plate materials, are laminated one above the other via an adhesive, and the structural laminated veneer lumber 2 is a material in which consolidation processing is applied with regard to the laminated veneer lumber 1.

For these veneers, a veneer 11 of a low-density tree species having an air-dry specific gravity of less than 0.5 and a veneer 12 of a high-density tree species having an air-dry specific gravity of 0.5 or more are used. Also, as the layer structure, upper and lower surface layers 21 arranged on the surface side, and an intermediate layer 22 arranged between the upper and lower surface layers 21 are provided.

### (Regarding veneer 11 of low-density tree species)

The veneer 11 of the low-density tree species is a veneer obtained from a tree species having an air-dry specific gravity of less than 0.5, and for example, an illustrative example thereof can indicate a veneer of tree species of Pinales, Pinaceae such as sakhalin fir (Abies sachalinensis) (air-dry specific gravity of 0.36 to 0.40), Yezo spruce (Picea jezoensis) (air-dry specific gravity of 0.40 to 0.43), and tree species of Cupressaceae, Conifer, and in particular, it is preferable to use a veneer of Japanese cedar (air-dry specific gravity of 0.36 to 0.45) produced in Japan or poplar (an air-dry specific gravity of about around 0.4) produced in the East China region of China.

Japanese cedar (Cupressaceae, Cedrus subfamily) is Japanese conifers planted in large numbers after the war and is required to thinning and main cutting from the viewpoint of the local environment, and promotion of their effective use is required, but sufficient development of demands has not progressed due to the problems of physical properties that they are relatively light so that strength and Young's coefficient are low and surface properties that they have many knots. Moreover, there are problems that the quality of material varies widely, uniform drying is difficult and moisture conductivity is poor, so that there is a problem that they are rarely used as a building structural material, but they are used as a veneer of the present invention, there is a high possibility to overcome the above-mentioned problems, and use thereof can be promoted.

Poplar (Malpighiales Salicaceae) is a fast-growing tree planted in large numbers in the East China region of China, etc., and can be harvested and logged about 10 years after planting, but it is light as its air-dry specific gravity of about around 0.4 and weak and the quality of material varies widely so that they are not used as wood for building structures, but when they are used as a veneer of the present invention, the use thereof may be promoted. These veneers 11 of the low-density tree species are arranged to a thickness of 2 to 3 mm, where the veneer 11 of the low-density tree species of Japanese cedar in the state before consolidation is about 2 mm thickness, and where the veneer 11 of the low-density tree species of poplar is about 3 mm thickness.

### (Regarding veneer 12 of high-density tree species)

The veneer 212 of the high-density tree species is a veneer obtained from a tree species having an air-dry specific gravity of 0.5 or more, and for example, it may include tree species of Fagales, Betulaceae, Rosales, Ulmaceae and Sapindales, Meliaceae such as Ulmus campestris (air-dry specific gravity of 0.59), Melia (air-dry specific gravity of 0.55 to 0.65), white birch (air-dry specific gravity of 0.57 to 0.63), etc., and it is preferable to use a fast-growing tree such as eucalyptus (air-dry specific gravity of about 0.55), and Satoyama broad-leaved trees such as Quercus serrata, Quercus acutissima and Quercus variabilis (specific gravity of 0.55 or more), etc.

Eucalyptus (Myrtaceae) has an advantage in which they are planted in large numbers in the South China region of China, etc., and an amount as resources is abundant. However, its sapwood has a problem that it is easily torn whereas the strength is high, and the specific gravity of its immature heartwood is the same as that of the sapwood but there is a problem that it is brittle and weak, so there is a problem that effective utilizing method is a little, but by using it as a veneer of the present invention, use thereof can be promoted.

The veneer 12 of the high-density tree species is arranged to a thickness thinner than the thickness of the veneer 11 of the low-density tree species like about 1.7 mm thickness, etc., in the veneer of eucalyptus in the state before consolidation.

### (Layer structure of surface layer 21)

As the layer structure, the upper and lower surface layers 21 arranged on the surface side, and the intermediate layer 22 arranged between the upper and lower surface layers 21 are provided.

The surface layer 21 uses only the veneers 11 of the low-density tree species, and a plurality of the veneers 11 are laminated so as to increase the effect of consolidation. As the surface layer 21, a plurality of the veneers 11 of the low-density tree species can be laminated, but if the number of the veneers 11 of the low-density tree species is too large, uniform consolidation becomes difficult so that it is appropriate to carry out with at most three sheets, and more preferably two sheets.

As a characteristic feature of the physical properties of wood, there is viscoelasticity (which is combined with elasticity and plasticity), and when a pressure is applied to wood from the outside, the stress becomes small from the outside toward the inside, so that consolidation increases at the outside by receiving a strong compression force. Therefore, in order to increase the consolidation effect, it is more effective to arrange the veneer 11 of a low-density tree species that is easily consolidated on the outside. On the other hand, when a veneer 12 of a high-density tree species such as eucalyptus, which not only has high-density and relatively high rigidity but also has a little viscoelasticity, is arranged on the surface layer portion, the effect of pressure becomes small and rigidity is high, so that resistance to compression becomes large, and as a result, a consolidation amount becomes small.

### (Layer structure of intermediate layer 22)

The intermediate layer 22 is a layer in which the veneer 11 of the low-density tree species and the surface layer 21 are mixedly present, and these are arranged alternately one by one. Incidentally, it is also possible to arrange two sheets alternately instead of one sheet at a time, or to change the ratio of the number of sheets of the veneer 11 of the low-density tree species to the surface layer 21, but for acting the compression effect of consolidation uniformly and effectively, it is preferable to arrange them one by one alternately. The veneers arranged at the most upper and lower portion in the intermediate layer 22 (in other words, the veneer in contact with the veneer of the surface layer 21 via an adhesive) are constituted by the veneer of the high-density tree species 21, whereby compression of the veneer of the surface layer 21 at the time of consolidation can be carried out more uniformly.

### (Adhesive 13 for lamination)

As an adhesive 13 for lamination, various adhesives for producing a laminated veneer lumber can be used, but it is preferable to carry out adhesion using a water-resistant heat-curable phenol-based adhesive aqueous solution. By using a water-soluble adhesive, the veneer is consolidated by the moisture therein and high pressure and high heat of the hot pressing at the time of consolidation.

Adhesive components such as a heat-curable phenol-based adhesive aqueous solution that is penetrated into cell lumen of the veneer surface layer portion from the adhesive layer by hot pressing are hardened by solidifying the resin by heating, whereby the adhesive layer and the veneer surface layer portion are solidified and hardened. By this, a hard layer is formed for each adhesive layer, and a hard layer and a soft layer are alternately formed, so that properties of the lumber material are stabilized.

### (Lamination step)

The lamination step is a step of producing a laminated veneer lumber 1 according to the standard method for producing LVL by laying up using the above-mentioned veneer 11 of the low-density tree species, the veneer 12 of the high-density tree species and the adhesive 13. Therefore, it is not necessary to significantly change the normal LVL producing step, and as a consolidation step described below, it is possible to produce the structural laminated veneer lumber 2 only by changing the conditions of the hot pressing which is also carried out in the producing step of LVL.

### (Consolidation step)

The consolidation step is a step of applying a pressure to the laminated veneer lumber 1 obtained in the lamination step in the thickness direction of the laminated veneer lumber 1 under the predetermined conditions, and may be heated, if necessary.

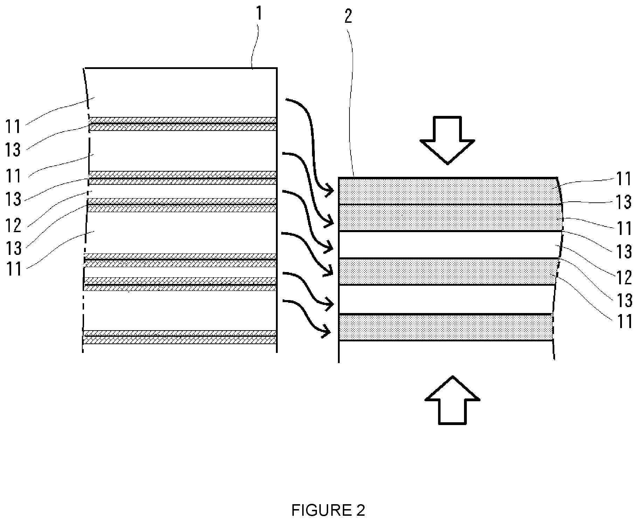

The hot-pressing pressure is suitably 10 atm to 15 atm (1.01325 to 1.519875 mPa), and the heating temperature is preferably 120°C to 150°C. The time of hot-pressing differs depending on the heating method and the thickness of the product, so that it is set according to the purpose. If dimensional stabilization by heat treatment is necessary, it is also possible to set to 130°C to 150°C. According to this consolidation, as shown in FIG. 2, the respective veneers are compressed in the thickness direction, but the veneer 11 of the low-density tree species has lower density as compared with that of the veneer 12 of the high-density tree species, so that the compression ratio shows a tendency to be large. Also, by using a heat-curable phenol-based adhesive aqueous solution, high pressure and high temperature are applied in a state where the water component is permeated in the upper and lower wood layer of the veneer, so that the portion is more greatly compressed. In the laminated composite wood material 2 subjected to consolidation, it is suitable that an average thickness of the veneer 11 of the low-density tree species is substantially equal or more than an average thickness of the veneer 12 of the high-density tree species, but an average thickness of the veneer 12 of the high-density tree species may be larger.

In addition, as a result of the presence of the veneer 12 of the high-density tree species having high density and hardness, the veneer 11 of the low-density tree species can receive the pressure more uniformly, and a uniform consolidation is carried out as a whole.

Incidentally, the above-mentioned veneer laminated thickness and hot-pressing conditions can be set in consideration of the finished dimensions, the planned bending strength and the planned bending Young's modulus of elasticity and can be carried out by variously changing.

### (Production Example)

Hereinafter, illustrative example of more specific production method is shown.
(1) As the veneer 11 of the low-density tree species, a veneer of 3 mm × 1,300 mm × 1,300 mm is collected from the raw material Japanese cedar raw timber and is adopted a veneer other than the immature heartwood veneer. Alternatively, from the raw material poplar raw timber, a veneer of 2.0 mm × 1,300 mm × 840 mm is collected and is adopted a veneer other than the immature heartwood. As the veneer 12 of the high-density tree species, a eucalyptus veneer is procured and adopted with a veneer of 1.7 mm × 1,300 mm × 630 mm from the South China region of China.
(2) As the adhesive 13, a predetermined amount of a heat-curable phenol-based adhesive aqueous solution is coated with a spreader. In order to increase the effect of consolidation, two or three layers of veneers 11 of the low-density tree species are laying up as the surface layer 21, and the veneer 11 of the low-density tree species and the veneer 12 of the high-density tree species are alternately laminated as the intermediate layer 22 and laid up.
(3) For the production of a usual poplar LVL, in consideration of loss in weight by drying, consolidation reduction and finished polishing, 10% thicker veneer thickness than the finished thickness dimension is laminated, but upon the practice of the present invention, 15% to 20% thicker veneer thickness is laminated. When producing laminated veneer lumber which is longer than the length of the veneer, the veneer end surface is connected by a scarf joint, but when laying up, the joint portion is apart from the adjacent joint portion by 30 times or more the thickness of the thicker veneer in accordance with the Japanese Agricultural Standard for the structural laminated veneer lumber.
(4) Consolidation step
   Consolidation is carried out by hot pressing.
   Hot-pressing pressure: 10 atm to 15 atm (1.01325 to 1.519875 mPa)
   Heating temperature: 120°C to 150°C (it can be also set to 130°C to 150°C)

Time of hot pressing: It may differ depending on the heating method and the thickness of the product, so set it according to the purpose. (5) After cutting and sander processing according to the finished dimensions, inspection and packaging are carried out. Regarding quality inspection of the products, 20 pieces are extracted from the production lot, bending strength, bending Young's modulus of elasticity and compression strength are measured, and the average value (AVE) and the standard deviation (c) are calculated, and the lot having AVE-3o (sigma = standard deviation) which is the specified value or more is considered to be acceptable.

### EXAMPLES

Hereinafter, Example of the present invention will be described but the present invention should not be understood only in this Example.

### (Example and Comparative Examples)

Sample size of the laminated composite wood material 2 was made 39 mm × 20 mm × 550 mm, and each eight samples were prepared according to Production Example with regard to Example 1 and Comparative Examples 1 and 2, and the results were evaluated.

For the structural laminated veneer lumber 2 of Example 1, a poplar veneer having 2.0 mm thick was used as the veneer 11 of the low-density tree species of the laminated veneer lumber 1, and a eucalyptus veneer having 1.7 mm thick was used as the veneer 12 of the high-density tree species.

For the surface layer 21, three sheets of veneers 11 of the low-density tree species were arranged, and for the intermediate layer 22, the veneer 12 of the high-density tree species and the veneer 11 of the low-density tree species were alternately laminated. For the adhesive 13, a water-resistant heat-curable phenol-based adhesive aqueous solution was used.

For the structural laminated veneer lumber 2 of Comparative Example 1, only a poplar veneer having 2.0 mm thick was used as the veneer 11 of the low-density tree species of the laminated veneer lumber 1.

For the structural laminated veneer lumber 2 of Comparative Example 2, only a eucalyptus veneer having 1.7 mm thick was used as the veneer 11 of the low-density tree species of the laminated veneer lumber 1.

### (Consolidation conditions)

Consolidation was carried out by hot pressing.

The consolidation conditions of Comparative Example 1 were made a temperature of 110°C and a pressure of 8 atm.

The consolidation conditions of Comparative Example 2 were made a temperature of 120°C and a pressure of 14 atm.

The consolidation conditions of Example 1 were made a temperature of 120°C and a pressure of 12 atm.

### (Test results)

The test results are shown in Table 1.

**[Table 1]**

| | Specific gravity | Standard deviation | Bending strength | Standard deviation | Bending young | Standard deviation |
|---|---|---|---|---|---|---|
| Example 1 | 0.64 | 0.02 | 83.6 | 2.9 | 11.78 | 0.34 |
| Comparative Example 1 | 0.57 | 0.19 | 75.6 | 8.3 | 9.61 | 0.65 |
| Comparative Example 2 | 0.59 | 0.02 | 72.9 | 3.1 | 11.79 | 0.53 |

• Number of samples is 8 for each of Example and Comparative Examples.
• Unit of bending strength: N/mm²
• Unit of bending young: 1,000 N/mm²
• The test is carried out at Hyogo Prefectural Forestry and Forest Technology Center, Japan

### (Evaluation)

(1) In all of Example and Comparative Examples, due to the influence of the increase in the weight of the adhesive by consolidation according to hot pressing, the specific gravity is higher than that of the veneer before consolidation.
(2) It was confirmed that, in Comparative Example 1, there is a large fluctuation in the partial material, but by the properties that bending strength is large and bending Young is low, it has the similar properties as those of Japanese cedar.
(3) Comparative Example 1 had a strength close to that of Comparative Example 2 due to the consolidation effect, but the standard deviation of the bending strength was large as 8.3. This is considered that since fluctuation in the material of the raw material is large, fluctuation is also large in the structural laminated veneer lumber 2.
(4) In Comparative Example 2, although a large consolidation effect was not exhibited as compared with the specific gravity of the raw material, rigidity of the raw material is a high property so that the bending Young's modulus of elasticity was higher than that of Comparative Example 1.
(5) In Example 1, due to the influence of the hot-pressing conditions being higher temperature and higher pressure than those of poplar, the consolidation effect of poplar is mainly large, and the numerical values of the bending strength and bending Young's modulus of elasticity were high, and the standard deviation is small, so that it was confirmed that the effect of improving the properties as a material was large.
(6) As mentioned above, as a comprehensive evaluation of the consolidation effect of the different species composite laminated veneer lumber, it can be said that there is suggestion that the consolidation effect of wood material of the low-density is large, which is consolidated to the specific gravity equal to or higher than that of the wood material of the high-density after the treatment, so that bending strength and bending Young's modulus of elasticity are high, and yet the standard deviation is small (fluctuation becomes small, that is, the lowest numerical value of the property becomes high).

### EXPLANATION OF REFERENCE NUMERALS

- 1: Laminated veneer lumber
- 2: Structural laminated veneer lumber
- 11: Veneer of low-density tree species
- 12: Veneer of high-density tree species
- 13: Adhesive
- 21: Surface layer
- 22: Intermediate layer

## Claims

1. A structural laminated veneer lumber in which a plurality of veneers, which are thin plate materials, are laminated one above the other via an adhesive, wherein
the plurality of veneers contains a veneer of a high-density tree species having an air-dry specific gravity of 0.5 or more and a veneer of a low-density tree species having an air-dry specific gravity of less than 0.5,
upper and lower surface layers arranged on a surface side of the structural laminated veneer lumber and an intermediate layer arranged between the upper and lower surface layers are provided,
only a plural sheet of veneers of the low-density tree species are arranged in the surface layer,
the veneers of the high-density tree species and the veneers of the low-density tree species are arranged in a mixed manner in the intermediate layer, and the veneer in contact with the veneer of the surface layer in the intermediate layer is composed of the veneer of the high-density tree species, and
the laminated material including the upper and lower surface layers and the intermediate layer is a consolidated laminated material compressed in a thickness direction.

2. The structural laminated veneer lumber as set forth in claim 1, wherein
only two or three sheets of veneers of the low-density tree species are arranged on the surface layer.

3. A laminated composite wood material as set forth in claim 1 or 2, wherein
the laminated material including the upper and lower surface layers and the intermediate layer is a consolidated laminated material compressed in a thickness direction, and in these veneers subjected to consolidation, an average thickness of the veneer of the low-density tree species is equal to or greater than an average thickness of the veneer of the high-density tree species.

4. The laminated composite wood material as set forth in claim 1 or 2, wherein
the adhesive is a water-soluble adhesive, and
the veneer of the high-density tree species and the veneer of the low-density tree species are alternately arranged in the intermediate layer.

5. The laminated composite wood material as set forth in claim 1 or 2, wherein
the laminated material including the upper and lower surface layers and the intermediate layer is a consolidated laminated material compressed in a thickness direction, in these veneers subjected to consolidation, an average thickness of the veneer of the low-density tree species is equal to or greater than an average thickness of the veneer of the high-density tree species,
the veneer of the high-density tree species and the veneer of the low-density tree species are alternately arranged in the intermediate layer,
the veneer of the high-density tree species is a veneer of eucalyptus, and the veneer of the low-density tree species is a veneer of Japanese cedar or poplar.

6. A method for producing a structural laminated veneer lumber in which a plurality of veneers, which are thin plate materials, are laminated one above the other by adhering, the method comprises;
a laminating step of laminating a plurality of the veneers one above the other via an adhesive to obtain a laminated veneer lumber and a consolidation step of applying pressure to the laminated veneer lumber in a vertical direction to obtain a consolidated laminate, wherein
as the plurality of the veneers used for the laminated veneer lumber, veneers of a high-density tree species having an air-dry specific gravity of 0.5 or more and veneers of a low-density tree species having an air-dry specific gravity of less than 0.5 are used, wherein
the laminating step is to prepare the laminated veneer lumber by laminating only a plural sheet of veneers of the low-density tree species as a surface layer, and by laminating a veneer of the high-density tree species and a veneer of the low-density tree species in a mixed manner as an intermediate layer between the upper and lower surface layers,
a heat-curable phenol-based adhesive aqueous solution is used for adhering of the veneers, and the consolidation step is to carry out the consolidation by a hot press that pressurizes and heats.
